# EUROPEAN PATENT APPLICATION

(11) **EP 4 694 564 A1**
(43) Date of publication of application: **11.02.2026**
(21) Application number: 23931582.3
(22) Date of filing: 07.04.2023
(51) Int. Cl.: H04W 76/27

(54) **RADIO RESOURCE CONTROL STATE CONTROL METHOD AND APPARATUS, AND WIRELESS COMMUNICATION METHOD AND APPARATUS**

(71) Applicant: Beijing Xiaomi Mobile Software Co., Ltd., Beijing 100085 (CN)
(72) Inventor: LI, Xiaolong, Beijing 100085 (CN)
(74) Representative: Stöckeler, Ferdinand
(86) International application number: PCT/CN2023/087134
(87) International publication number: WO 2024/207522

(57) **Abstract**

The present disclosure relates to the technical field of communications, and in particular to a radio resource control (RCC) state control method and apparatus, and a wireless communication method and apparatus. The RRC state control method comprises: when a terminal is in a discontinuous coverage scenario, controlling the RRC state of the terminal according to an out-of-synchronization related instruction and/or the state of a timer. When the terminal is in a discontinuous coverage scenario, if a problem that has occurred in a radio link is caused by no network coverage in the discontinuous coverage scenario of the terminal, the terminal performing RRC reestablishment may cause waste of resources. According to the present disclosure, in this case, the terminal does not perform RRC reestablishment, but controls the RRC state of the terminal according to the out-of-synchronization related instruction and/or the state of the timer, thereby facilitating the prevention of the waste of resources.

## Description

### TECHNICAL FIELD

The disclosure relates to the field of communication technologies, in particular to a method for controlling a radio resource control state, a wireless communication method, an apparatus for controlling a radio resource control state, a wireless communication apparatus, a communication system, a communication device, and a computer-readable storage medium.

### BACKGROUND

A terminal may perform a radio resource control (RRC) re-establishment when detecting a problem on a radio link, but in some scenarios, it may cause some problems when executing operations according to this logic.

### SUMMARY

In order to solve technical problems in related arts, the embodiments of the disclosure provide a method for controlling an RRC state, a wireless communication method, an apparatus for controlling an RRC state, a wireless communication apparatus, a communication system, a communication device and a computer-readable storage medium.

According to a first aspect of embodiments of the disclosure, a method for controlling an RRC state is disclosed. The method is performed by a terminal, and includes: in a case the terminal is in a discontinuous coverage scenario, controlling an RRC state of the terminal according to an out-of-sync related indication and/or a state of a timer.

According to a second aspect of embodiments of the disclosure, a wireless communication method is proposed. The method is performed by a network device, and includes: communicating with the terminal that executes the above method for controlling the RRC state.

According to a third aspect of embodiments of the disclosure, an apparatus for controlling an RRC state is proposed. The apparatus includes: a processing module, configured to, in a case a terminal is in a discontinuous coverage scenario, control an RRC state of the terminal according to an out-of-sync related indication and/or a state of a timer.

According to a fourth aspect of embodiments of the disclosure, a wireless communication apparatus is proposed. The apparatus includes: a communicating module, configured to communicate with the terminal that executes the above method for controlling the RRC state.

According to a fifth aspect of embodiments of the disclosure, a communication system is proposed. The communication system includes a terminal and a network device. The terminal is configured to implement the above method for controlling the RRC state, and the network device is configured to implement the above wireless communication method.

According to a sixth aspect of embodiments of the disclosure, a communication device is disclosed. The communication device includes: a processor and a memory for storing computer programs. When the computer programs are executed by the processor, the above method for controlling the RRC state is implemented.

According to a seventh aspect of embodiments of the disclosure, a communication device is proposed. The communication device includes: a processor and a memory for storing computer programs. When the computer programs are executed by the processor, the above wireless communication method is implemented.

According to an eighth aspect of embodiments of the disclosure, a computer-readable storage medium is disclosed, which is used for storing computer programs. When the computer programs are executed by a processor, the above method for controlling the RRC state is implemented.

According to a ninth aspect of embodiments of the disclosure, a computer-readable storage medium is proposed, which is used for storing computer programs. When the computer programs are executed by a processor, the above wireless communication method is implemented.

**In** a case the terminal is in the discontinuous coverage scenario, if the problem with the radio link arises due to the terminal lacking network coverage in the discontinuous coverage scenario, performing the RRC reestablishment would result in wasted resource. According to the disclosure, in this case, the terminal may not perform the RRC reestablishment, but control the RRC state of the terminal according to the out-of-sync related indication and/or the state of the timer, to avoid wasting resource.

### BRIEF DESCRIPTION OF THE DRAWINGS

In order to more clearly illustrate the technical solutions in the embodiments of the disclosure, the drawings required for use in the descriptions of the embodiments are briefly introduced below. Obviously, the drawings described below are only some embodiments of the disclosure, but other drawings may be obtained by those skilled in this field based on these drawings without inventive work.
FIG. 1 is a schematic diagram of an application scenario illustrated according to an embodiment of the disclosure.
FIG. 2 is a schematic flowchart of a method for controlling an RRC state illustrated according to an embodiment of the disclosure.
FIG. 3 is a schematic flowchart of a method for controlling an RRC state illustrated according to an embodiment of the disclosure.
FIG. 4 is a schematic flowchart of a method for controlling an RRC state illustrated according to an embodiment of the disclosure.
FIG. 5 is a schematic flowchart of a method for controlling an RRC state illustrated according to an embodiment of the disclosure.
FIG. 6 is a schematic flowchart of a method for controlling an RRC state illustrated according to an embodiment of the disclosure.
FIG. 7 is a schematic flowchart of a method for controlling an RRC state illustrated according to an embodiment of the disclosure.
FIG. 8 is a schematic flowchart of a method for controlling an RRC state illustrated according to an embodiment of the disclosure.
FIG. 9 is a schematic flowchart of a method for controlling an RRC state illustrated according to an embodiment of the disclosure.
FIG. 10 is a schematic flowchart of a method for controlling an RRC state illustrated according to an embodiment of the disclosure.
FIG. 11 is a schematic flowchart of a method for controlling an RRC state illustrated according to an embodiment of the disclosure.
FIG. 12 is a schematic flowchart of a method for controlling an RRC state illustrated according to an embodiment of the disclosure.
FIG. 13 is a schematic block diagram of an apparatus for controlling an RRC state illustrated according to an embodiment of the disclosure.
FIG. 14 is a schematic block diagram of a wireless communication apparatus illustrated according to an embodiment of the disclosure.
FIG. 15 is a schematic block diagram of a wireless communication device illustrated according to an embodiment of the disclosure.
FIG. 16 is a schematic block diagram of a device for controlling an RRC state illustrated according to an embodiment of the disclosure.

### DETAILED DESCRIPTION

The implementations or embodiments of the disclosure are not all illustrated below, and only some implementations or examples are illustrated as examples and do not limit the scope of protection of the disclosure. Without conflict, each step in an implementation or embodiment may be implemented as an independent embodiment, and the steps may be combined arbitrarily. For example, a solution that removing some steps from an implementation or embodiment may also be implemented as an independent embodiment, and the order of execution of the steps in an implementation or embodiment may be exchanged arbitrarily. Moreover, optional implementations or embodiments in the implementations or embodiments may be combined arbitrarily, and the implementations or embodiments may be combined arbitrarily. For example, some or all the steps of different implementations or embodiments may be combined arbitrarily, and an implementation or embodiment may be arbitrarily combined with optional implementations or embodiments in the implementations or embodiments.

In some implementations or embodiments, the terms "in response to", "in a case", "when", "while", "if", etc., in the disclosure are interchangeable.

**In** some implementations or embodiments, in the disclosure, the descriptions such as "A or B", "A and/or B", "at least one of A or B", "in one case A, and in another case B", "in response to one case A, and in response to another case B", etc., may constitute at least one of the following technical solutions depending on the situation: executing A independently of B, i.e., executing A in some implementations or embodiments; executing B independently of A, i.e., executing B in some implementations or embodiments; selectively executing A and B, i.e., selecting A or B for execution in some implementations or embodiments; or executing both A and B, i.e., executing both A and B in some implementations or embodiments.

In some implementations or embodiments, the terms "including A", "comprising A", "used to indicate A" and "carrying A" in the disclosure may be interpreted as directly carrying A or indirectly indicating A.

Moreover, each of the elements, rows or columns in the table involved in the disclosure may be implemented as an independent embodiment, and any combination of the elements, rows and columns can also be implemented as an independent embodiment.

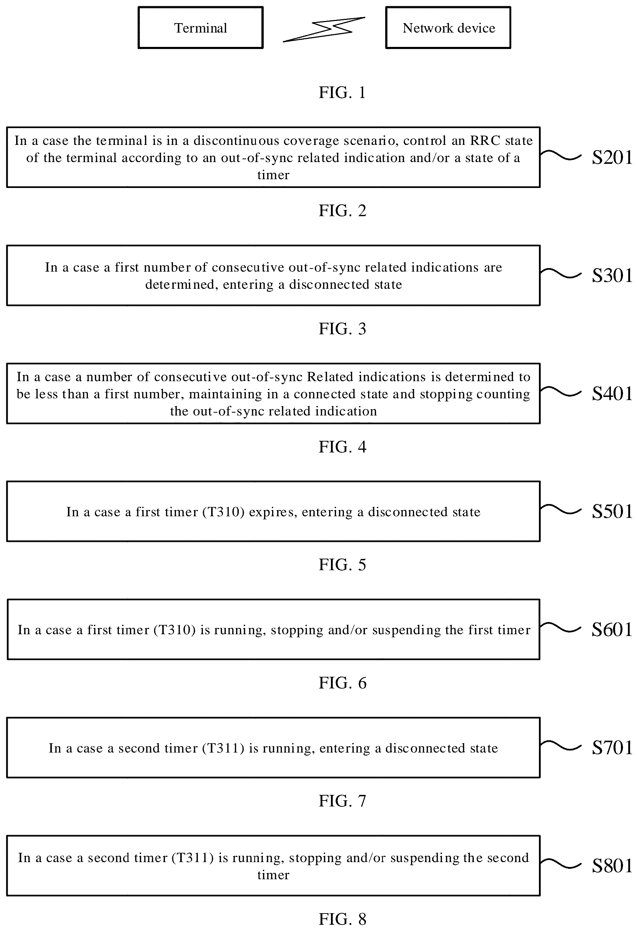

FIG. 1 is a schematic diagram of an application scenario illustrated according to an embodiment of the disclosure.

As illustrated in FIG. 1, an embodiment of the disclosure may be applied to a scenario in which a terminal communicates with a network device, but it is not limited to this scenario. The various entities in FIG. 1 are examples. The implementations or embodiments of the disclosure may include all or part of the entities in FIG. 1, and other entities outside of FIG. 1. The number of each type of entity is arbitrary and is not limited to FIG. 1. The various connections shown in FIG. 1 are examples, and the entities may or may not be connected with each other. Moreover, the connections may be implemented in any manner. For example, they may be implemented as direct connections or indirect connections, or wired connections or wireless connections.

In an embodiment, the terminal includes, but is not limited to, a mobile phone, a tablet computer, a wearable device, a sensor, an Internet of Things (IoT) device or other communication devices. The terminal can communicate with the network device. The network device includes, but is not limited to, network devices in 4G, 5G, 6G and other communication systems, such as a base station and a core network, etc.

In an embodiment, in a case the terminal is in a connected state, radio link failure (RLF) is triggered when a problem with the radio link is detected, and then the terminal performs RRC re-establishment. If the RRC re-establishment fails, the terminal enters an idle state.

In an embodiment, when the terminal detects an out-of-sync problem, it determines that a problem occurs in the radio link.

It should be noted that the state of the terminal described in the disclosure, e.g., a connected state, a disconnected state, an idle state, or an inactive state, refers to an RRC state.

In an embodiment, in a case the terminal is in a non-terrestrial network (NTN), it can communicate with a terrestrial network device via an aerial communication device (e.g., a satellite, an aerial platform, a space station, etc.).

Taking the aerial communication device as the satellite as an example, since the satellite is in motion in the air, sometimes the terminal is within the coverage of the satellite, i.e., within the network coverage, so that communication may be carried out through the satellite. However, sometimes it is not within the coverage of the satellite, i.e., outside of the network coverage, so that communication cannot be carried out through the satellite, and a communication connection may be interrupted.

It may be seen that in a case the terminal is in the NTN, it is not always within the network coverage, i.e., it is in discontinuous network coverage. However, if the problem with the radio link is caused by the lack of network coverage in the discontinuous coverage scenario, even if the terminal performs the RRC re-establishment, the RRC re-establishment cannot be implemented successfully due to the lack of network coverage. Therefore, performing the RRC re-establishment in this case where there is no network coverage would result in wasted resources (such as the terminal's battery power).

In an embodiment, the NTN includes an IoT NTN. The IoT includes a narrow band IoT (NB-IoT) and an enhanced machine-type communication (eMTC) network.

FIG. 2 is a schematic flowchart of a method for controlling an RRC state illustrated according to an embodiment of the disclosure. The method in the embodiment of FIG. 2 is performed by a terminal.

As illustrated in FIG. 2, the method for controlling the RRC state includes the following blocks.

In block S201, in a case the terminal is in a discontinuous coverage scenario, an RRC state of the terminal is controlled according to an out-of-sync related indication and/or a state of a timer.

In an embodiment, the terminal may determine whether it is in a discontinuous coverage scenario.

If the terminal is not in a discontinuous coverage scenario, the RRC state may be controlled based on related technologies, e.g., performing the RRC re-establishment when the problem with the radio link is detected (as described above), which will not be repeated here.

In the case the terminal is in the discontinuous coverage scenario, if the problem with the radio link is caused by the lack of network coverage in the discontinuous coverage scenario, performing the RRC reestablishment may lead to resource waste. In the embodiment, the terminal does not perform the RRC reestablishment in this case, but control the RRC state of the terminal according to the out-of-sync related indication and/or the state of the timer, to avoid resource waste.

**In** an embodiment, the discontinuous coverage scenario includes at least one of: no network coverage; an upcoming network coverage los; or an acquisition of relevant time information on no network coverage.

**In** an embodiment, the terminal determines whether the terminal is in a discontinuous coverage scenario based on auxiliary information.

For example, the auxiliary information may be carried in a broadcast signaling, such as a system information block (SIB), specifically SIB32.

For example, the auxiliary information may be carried in a unicast signaling, such as an RRC signaling.

For example, the auxiliary information may come from an external server. The external server sends the auxiliary information to the terminal via a protocol data unit (PDU) session or a short messaging service (SMS).

For example, the auxiliary information may come from a core network. The core network sends a message to the terminal to inform the terminal of a time when it enters no network coverage and a time when it returns to a network coverage.

**In** an embodiment, in a case the terminal is in the NTN, the auxiliary information may include satellite ephemeris information and other information related to the network coverage of the satellite. Based on the auxiliary information, the terminal may predict whether it is about to lose the network coverage of the satellite, or determine whether it is within the network coverage of the satellite and determine a relevant time information on losing the network coverage of the satellite. The relevant time information includes at least one of the following: a duration without network coverage, a starting time of no network coverage, and a time of returning to a network coverage.

It should be noted that the terminal may control the RRC state of the terminal according to the out-of-sync related indication, or the terminal may control the RRC state of the terminal according to the state of the timer, or the terminal may control the RRC state of the terminal according to the out-of-sync related indication and the state of the timer.

The way the terminal controls the RRC state of the terminal according to the out-of-sync related indication is described below through several embodiments.

FIG. 3 is a schematic flowchart of a method for controlling an RRC state illustrated according to an embodiment of the disclosure. The method in the embodiment of FIG. 3 is performed by a terminal. As illustrated in FIG. 3, controlling the RRC state of the terminal according to the out-of-sync indication and/or the state of the timer, includes:

step S301: in a case a first number of consecutive out-of-sync indications are determined, entering a disconnected state. The first number may be referred to as N310.

It should be noted that the embodiment of FIG. 3 may be implemented independently or in combination with at least one other embodiment in the disclosure, which may be selected as needed and is not limited here.

In an embodiment, the terminal may determine whether the number of consecutive out-of-sync indications reaches the first number. The out-of-sync indication may be sent from a lower layer (e.g., a physical layer) to a higher layer (e.g., an RRC layer), and the terminal determines whether the number of consecutive out-of-sync indications received by the higher layer reaches the first number.

In an embodiment, the out-of-sync indication includes at least one of: an out-of-sync indication; or an early-out-of-sync indication.

For example, when the terminal determines the first number of consecutive out-of-sync indications, it determines that communication (e.g., uplink communication) between the terminal and the network device is out of sync, and further determines that there is a problem with the radio link. In this case, if the terminal is in a discontinuous coverage scenario, it may be determined that the problem with the radio link is caused by the loss of network coverage and there is no need for the terminal to perform the RRC re-establishment, and thus the terminal is controlled to enter a disconnected state, to avoid resource waste caused by the RRC re-establishment performed by terminal in the case of the problem with the radio link due to the loss of network coverage, and/or, the terminal is controlled to not try to restore uplink synchronization. For example, in the case the terminal determines the first number of consecutive out-of-sync indications, there is no need to keep waiting for an in-of-sync indication within a certain period of time in order to restore uplink synchronization. Moreover, when the first number of consecutive out-of-sync indications are determined, the terminal does not need to start a timer T310, but directly enters a disconnected state.

For example, when the terminal determines the first number of consecutive early-out-of-sync indications, it start a timer T314. In a case the T314 expires, the terminal may indicate early detection of physical layer problems to the network device, e.g., via an RRC message. Therefore, in a case the terminal determines the first number of consecutive early-out-of-sync indications, it may also indicate to a certain extent that there is a problem with the radio link. In this case, if the terminal is in a discontinuous coverage scenario, it may be determined that the problem with the radio link is caused by the loss of coverage and there is no need to perform RRC re-establishment, at this time, the terminal is controlled to enter a disconnected state, to avoid resource waste caused by the RRC re-establishment performed by terminal in the case of the problem with the radio link due to the loss of network coverage, and/or, the terminal is controlled to not try to restore uplink synchronization. For example, when the terminal determines the first number of consecutive early-out-of-sync indications, there is no need to keep waiting for an in-of-sync indication within a certain period of time in order to restore uplink synchronization. Moreover, when the first number of consecutive early-out-of-sync indications are determined, the terminal does not need to start the T314, but directly enters a disconnected state.

In an embodiment, after entering a disconnected state, the terminal does no perform operations in the disconnected state in the case of no network coverage. For example, the operations in the disconnected state include at least one of: public land mobile network (PLMN) selection, cell selection, cell reselection, and paging. Once there is network coverage, the operations in the disconnected state may be executed.

It should be noted that the disconnected state in the embodiments of the disclosure includes an idle state or an inactive state.

FIG. 4 is a schematic flowchart of a method for controlling an RRC state illustrated according to an embodiment of the disclosure. The method in the embodiment of FIG. 4 is performed by a terminal. As illustrated in FIG. 4, controlling the RRC state of the terminal according to the out-of-sync indication and/or the state of the timer, includes:
block S401: in a case a number of consecutive out-of-sync indications is determined to be less than a first number, maintaining in a connected state and stopping counting the out-of-sync related indication.

It should be noted that the embodiment of FIG. 4 may be implemented independently or in combination with at least one other embodiment in the disclosure, which may be selected as needed and is not limited here.

**In** an embodiment, the terminal may determine whether the number of consecutive out-of-sync indications reaches the first number. The out-of-sync related indications may be sent from a lower layer (e.g., a physical layer) to a higher layer (e.g., an RRC layer), and the terminal may determine whether the number of consecutive out-of-sync related indications received by the higher layer reaches the first number.

For example, in a case the terminal determines the first number of consecutive out-of-sync indications, it cannot determine that communication (e.g., uplink communication) between the terminal and the network device is out of sync. In this case, if the terminal is in a discontinuous coverage scenario, since the communication between the terminal and the network device is out of sync, there is no need to keep counting the out-of-sync indication, so the terminal can remain in a connected state and stop counting the out-of-sync indication without triggering RLF, to avoid resource waste caused by the terminal when continuing to count the out-of-sync indication when the network coverage is lost.

For example, in a case the terminal determines the number of consecutive early-out-of-sync indications is less than the first number, it cannot determine that communication (e.g., uplink communication) between the terminal and the network device is out of sync. In this case, if the terminal is in a discontinuous coverage scenario, since the communication between the terminal and the network device is out of sync, there is no need to keep counting the early-out-of-sync indication, so the terminal can remain in a connected state and stop counting the early-out-of-sync indication without triggering RLF, to avoid resource waste caused by the terminal when continuing to count the early-out-of-sync indication when the network coverage is lost.

**In** an embodiment, the method for controlling the RRC state further includes: upon entering a network coverage, continuing to count the out-of-sync related indication.

Since the terminal remains in the connected state when it stops counting the out-of-sync related indication, it can continue to count the out-of-sync related indication upon entering the network coverage, for example, continue to count on the basis of a value obtained when it stops counting the out-of-sync related indication.

The way the terminal controls the RRC state of the terminal according to the state of the timer is described below through several embodiments.

**In** an embodiment, the timer includes at least one of:
a first timer, e.g., T310. In a case an out-of-sync problem on a radio link is detected (for example, by determining the first number of consecutive out-of-sync indications, it is possible to determine that the radio link has the out-of-sync problem), the first timer is started, and in a case the first timer expires and a synchronization with a network device is not restored, a RRC reestablishment is initiated;
a second timer, e.g., T311. In a case a RRC reestablishment is initiated, the second timer is started, and in a case the second timer expires and the radio resource control reestablishment fails, the terminal enters a disconnected state;
a third timer, e.g., T317, which is used for counting a validity period of system information, and the system information includes ephemeris information. For example, when the terminal obtains a system information containing ephemeris information, it determines to start the third timer at an epoch time according to the epoch time and a validity duration in the system information, and the duration of the timer is the validity duration; or
a fourth timer, e.g., T318. In a case the third timer expires, for example, T317 expires, the fourth timer is started, the terminal tries to obtain a system message containing ephemeris information, and in a case the fourth timer expires and system information fails to be acquired, the terminal enters a disconnected state.

FIG. 5 is a schematic flowchart of a method for controlling an RRC state illustrated according to an embodiment of the disclosure. The method in the embodiment of FIG. 5 is performed by a terminal. As illustrated in FIG. 5, controlling the RRC state of the terminal according to the out-of-sync related indication and/or the state of the timer includes:
block S501: in a case a first timer (T310) expires, entering a disconnected state. The disconnected state includes at least one of the following: an idle state or an inactive state.

It should be noted that the embodiment of FIG. 5 may be implemented independently or in combination with at least one other embodiment in the disclosure, which may be selected as needed and is not limited here.

In an embodiment, in a case the first timer expires, the terminal may determine that there is a problem with the radio link, for example, it may determine that the radio link is out of sync. In this case, if the terminal is in a discontinuous coverage scenario, it may be determined that the problem with the radio link is caused by the loss of coverage. Therefore, the terminal is controlled to enter a disconnected state without having to perform RRC re-establishment, nor does it have to wait until the RRC re-establishment fails to enter the disconnected state, to avoid resource waste caused by the RRC re-establishment performed by terminal in a case of the problem with the radio link due to the loss of network coverage. The terminal can enter the disconnected state rapidly without having to go through operations such as RRC re-establishment or RRC re-establishment failure, and it only stays in the connected state for a short period of time. Since the power consumption of the terminal in the disconnected state is less than that in the connected state, it is beneficial to saving power of the terminal.

FIG. 6 is a schematic flowchart of a method for controlling an RRC state illustrated according to an embodiment of the disclosure. The method in the embodiment of FIG. 6 is performed by a terminal. As illustrated in FIG. 6, controlling the RRC state of the terminal according to the out-of-sync indication and/or the state of the timer, includes:
block S601: in a case a first timer (T310) is running, stopping, and/or suspending the first timer.

It should be noted that the embodiment of FIG. 6 may be implemented independently or in combination with at least one other embodiment in the disclosure, which may be selected as needed and is not limited here.

In an embodiment, in a case the first timer is running, the terminal cannot determine whether the radio link can recover synchronization. For example, it requires determining N310 consecutive in-of-sync indications to determine when synchronization has been restored. However, in this case, if the terminal is in a discontinuous coverage scenario, communication between the terminal and the network device is out of sync, and thus it is unnecessary for the first timer to keep counting. Therefore, the terminal can stop and/or suspend the first timer without triggering RLF, to avoid resource waste caused if the first timer keeps counting when the terminal loses network coverage.

In this case, the terminal may remain in the connected state or may enter the disconnected state.

In an embodiment, the method for controlling the RRC state further includes: upon entering a network coverage, restarting the first timer, or allowing the first timer to continue to count.

Since the RLF is not triggered when the terminal stops and/or suspends the first timer, when the terminal enters the network coverage, it can quickly restart the first timer or allow the first timer to continue to count, and determine whether the RLF is triggered.

For example, restarting the first timer or allowing the first timer to continue to count may be to continue to count on the basis of a value obtained when the first timer stops counting, or to continue to count from 0. For example, if the first timer continues to count from 0, after entering network coverage, the network device may reconfigure a validity duration of the first timer for the terminal, or the terminal uses the validity duration previously configured for the first timer by the network device.

FIG. 7 is a schematic flowchart of a method for controlling an RRC state illustrated according to an embodiment of the disclosure. The method in the embodiment of FIG. 7 is performed by a terminal. As illustrated in FIG. 7, controlling the RRC state of the terminal according to the out-of-sync indication and/or the state of the timer, includes:
block S701: in a case a second timer (T311) is running, entering a disconnected state. The disconnected state includes at least one of the following: an idle state or an inactive state.

It should be noted that the embodiment of FIG. 7 may be implemented independently or in combination with at least one other embodiment in the disclosure, which may be selected as needed and is not limited here.

In an embodiment, in a case the second timer is running, the terminal cannot determine whether the RRC re-establishment may be successfully completed. In this case, if the terminal is in a discontinuous coverage scenario, although the second timer has not expired, the RRC re-establishment cannot be successfully completed. Since the power consumption of the terminal in the disconnected state is less than that in the connected state, when the second timer is running, the terminal is controlled to enter the disconnected state, to save power.

FIG. 8 is a schematic flowchart of a method for controlling an RRC state illustrated according to an embodiment of the disclosure. The method in the embodiment of FIG. 8 is performed by a terminal. As illustrated in FIG. 8, controlling the RRC state of the terminal according to the out-of-sync indication and/or the state of the timer, includes:
block S801: in a case a second timer (T311) is running, stopping, and/or suspending the second timer.

It should be noted that the embodiment of FIG. 8 may be implemented independently or in combination with at least one other embodiment in the disclosure, which may be selected as needed and is not limited here.

In an embodiment, in a case the second timer is running, the terminal cannot determine whether the radio link can recover synchronization, for example, it needs to determine N310 consecutive in-of-sync indications to determine whether the synchronization is recovered. However, in this case, if the terminal is in a discontinuous coverage scenario, communication between the terminal and the network device is out of sync, so it is unnecessary for the second timer to keep counting, and thus the terminal can stop and/or suspend the second timer, to avoid resource waste caused if the second timer keeps counting when the terminal loses network coverage.

In this case, the terminal may remain in a connected state, or may enter a disconnected state.

In an embodiment, the method for controlling the RRC state further includes: upon entering a network coverage, restarting the second timer, or allowing the second timer to continue to count.

Since RRC re-establishment fails when the terminal stops or suspends the counting of the second timer, when the terminal enters the network coverage, it can quickly restart the second timer or allow the second timer to continue to count to perform the RRC re-establishment.

For example, restarting the second timer or allowing the second timer to continue to count may be to continue to count on the basis of a value obtained when the second timer stops counting, or to continue to count from 0. For example, if the second timer continues to count from 0, after entering network coverage, the network device may reconfigure a validity duration of the second timer for the terminal, or the terminal uses the validity duration previously configured for the second timer by the network device.

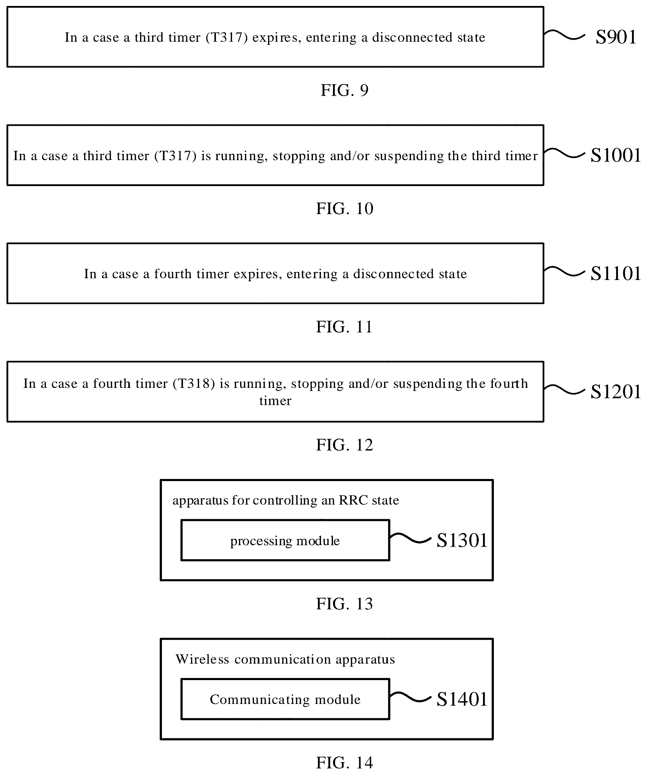

FIG. 9 is a schematic flowchart of a method for controlling an RRC state illustrated according to an embodiment of the disclosure. The method in the embodiment of FIG. 9 is performed by a terminal. As illustrated in FIG. 9, controlling the RRC state of the terminal according to the out-of-sync indication and/or the state of the timer, includes:

block S901: in a case a third timer (T317) expires, entering a disconnected state. The disconnected state includes at least one of the following: an idle state or an inactive state.

It should be noted that the embodiment of FIG. 9 may be implemented independently or in combination with at least one other embodiment in the disclosure, which may be selected as needed and is not limited here.

In an embodiment, in a case the third timer expires, the terminal may determine that ephemeris information is invalid. In this case, if the terminal is in a discontinuous coverage scenario, it is unnecessary to reacquire system information containing the ephemeris information, and the terminal is controlled to enter the disconnected state rapidly without having to reacquire the system information, to save power.

FIG. 10 is a schematic flowchart of a method for controlling an RRC state illustrated according to an embodiment of the disclosure. The method in the embodiment of FIG. 10 is performed by a terminal. As illustrated in FIG. 10, controlling the RRC state of the terminal according to the out-of-sync related indication and/or the state of the timer includes:
block S1001: in a case a third timer (T317) is running, stopping, and/or suspending the third timer.

It should be noted that the embodiment of FIG. 10 may be implemented independently or in combination with at least one other embodiment in the disclosure, which may be selected as needed and is not limited here.

In an embodiment, in a case the third timer is running, the terminal cannot determine whether ephemeris information is invalid. However, in this case, if the terminal is in a discontinuous coverage scenario, the terminal cannot obtain system information containing the ephemeris information, so it is unnecessary for the third timer to keep counting, and thus the terminal can stop and/or suspend the third timer without triggering RLF, to avoid resource waste caused if the third timer keeps counting when the terminal loses network coverage.

In this case, the terminal may remain in a connected state, or may enter a disconnected state.

In an embodiment, the method for controlling the RRC state further includes: upon entering a network coverage, restarting the third timer, or allowing the third timer to continue to count.

Since there is no network coverage when the terminal stops and/or suspends the third timer, when the terminal enters network coverage, it can restart the third timer or make the third timer continue to count and obtain the system information containing the ephemeris information.

For example, restarting the third timer or allowing the third timer to continue to count may be to continue to count based on a value obtained when the third timer stops counting or determining an epoch time and a validity duration of the timer according to a system message (containing the epoch time, the validity duration, etc.) broadcast by the network device.

FIG. 11 is a schematic flowchart of a method for controlling an RRC state illustrated according to an embodiment of the disclosure. The method in the embodiment of FIG. 11 is performed by a terminal. As illustrated in FIG. 11, controlling the RRC state of the terminal according to the out-of-sync indication and/or the state of the timer, includes:
block S1101: in a case a fourth timer expires, entering a disconnected state. The disconnected state includes at least one of the following: an idle state or an inactive state.

It should be noted that the embodiment of FIG. 11 may be implemented independently or in combination with at least one other embodiment in the disclosure, which may be selected as needed and is not limited here.

In an embodiment, in a case the fourth timer expires, the terminal may determine that there is a problem with a radio link. In this case, if the terminal is in a discontinuous coverage scenario, it may be determined that the problem with the radio link is caused by the loss of coverage. Therefore, it is unnecessary to perform RRC reestablishment, but to control the terminal to enter the disconnected state, to avoid resource waste caused by the RRC reestablishment carried out when there is a problem with the radio link due to the loss of coverage.

FIG. 12 is a schematic flowchart of a method for controlling an RRC state illustrated according to an embodiment of the disclosure. The method in the embodiment of FIG. 12 is performed by a terminal. As illustrated in FIG. 12, controlling the RRC state of the terminal according to the out-of-sync indication and/or the state of the timer, includes:
block S1201: in a case a fourth timer (T318) is running, stopping, and/or suspending the fourth timer.

It should be noted that the embodiment of FIG. 12 may be implemented independently or in combination with at least one other embodiment in the disclosure, which may be selected as needed and is not limited here.

In an embodiment, in a case the fourth timer is running, the terminal cannot determine whether RRC reestablishment may be completed. However, in this case, if the terminal is in a discontinuous coverage scenario, since the terminal has no network coverage, it is unnecessary to perform RRC reestablishment, and there is no need for the fourth timer to keep counting. Therefore, the terminal stops and/or suspends the fourth timer, and does not perform the RRC reestablishment, to avoid resource waste caused if the fourth timer keeps counting when the terminal loses network coverage.

In an embodiment, the method for controlling the RRC state further includes: upon entering a network coverage, restarting the fourth timer, or allowing the fourth timer to continue to count.

Since the terminal stops the RRC reestablishment when the terminal stops and/or suspends the fourth timer, when the terminal enters network coverage, it can restart the fourth timer or make the fourth timer continue to count and perform the RRC reestablishment.

For example, restarting the fourth timer or allowing the fourth timer to continue to count may be to continue to count based on a value obtained when the fourth timer stops counting or determining an epoch time and a validity duration of the timer according to a system message (containing the epoch time, the validity duration, etc.) broadcast by the network device.

In this case, the terminal may remain in a connected state, or may enter a disconnected state.

In an embodiment, the disclosure also provides a wireless communication method. The method is performed by a network device, and includes: communicating with the terminal that executes the method for controlling the RRC state of any of the above embodiments.

In an embodiment, the wireless communication method further includes: reconfiguring and/or re-indicating the validity duration of the timer for the terminal.

For example, for the first timer, the second timer and the fourth timer mentioned above, the network device may reconfigure the validity duration for the terminal. Consequently, when the timer continues to count, it may start counting from 0 and expire upon reaching the validity duration reconfigured by the network device.

For example, for the third timer, the network device re-indicates the validity duration of the third timer to the terminal by broadcasting a system information. In this case, when the timer continues to count, it may start from 0 and expire upon reaching the validity duration re-indicated by the network device.

It should be noted that other contents related to this embodiment can refer to the descriptions of relevant contents in the previous embodiments, which will not be repeated here.

Corresponding to the above embodiments of the method for controlling the RRC state and the wireless communication method, the disclosure also provides embodiments of an apparatus for controlling an RRC state and a wireless communication apparatus.

FIG. 13 is a schematic block diagram of an apparatus for controlling an RRC state illustrated according to an embodiment of the disclosure. As illustrated in FIG. 13, the apparatus for controlling the RRC state includes:
a processing module 1301, configured to, in a case a terminal is in a discontinuous coverage scenario, control an RRC state of the terminal according to an out-of-sync related indication and/or a state of a timer.

In an embodiment, the processing module is configured to: in a case a first number of consecutive out-of-sync related indications are determined, enter a disconnected state.

In an embodiment, the processing module is configured to: in a case a number of consecutive out-of-sync related indications is determined to be less than a first number, maintain in a connected state and stop counting the out-of-sync related indication.

In an embodiment, the processing module is configured to: upon entering a network coverage, continue to count the out-of-sync related indication.

In an embodiment, the out-of-sync related indication includes at least one of: an out-of-sync indication; or an early-out-of-sync indication.

In an embodiment, the timer includes at least one of:
a first timer, in which in a case an out-of-sync problem on a radio link is detected, the first timer is started, and in a case the first timer expires and a synchronization with a network device is not restored, RRC reestablishment is initiated;
a second timer, in which in a case a radio resource control reestablishment is initiated the second timer is started, and in a case the second timer expires and the radio resource control reestablishment fails, the terminal enters a disconnected state;
a third timer, used for counting a validity period of system information; or
a fourth timer, in which in a case a third timer expires, the fourth timer is started, and in a case the fourth timer expires and system information fails to be acquired, the terminal enters a disconnected state.

In an embodiment, the processing module is configured to: in a case the first timer expires, enter a disconnected state.

In an embodiment, the processing module is configured to: in a case the first timer is running, stop and/or suspend the first timer.

In an embodiment, the processing module is configured to: upon entering the network coverage, restart the first timer or allow the first timer to continue to count.

In an embodiment, the processing module is configured to: in a case the second timer is running, enter the disconnected state.

In an embodiment, the processing module is configured to: in a case the second timer is running, stop and/or suspend the second timer.

In an embodiment, the processing module is configured to: upon entering a network coverage, restart the second timer or allow the second timer to continue to count.

In an embodiment, the processing module is configured to: in a case the third timer expires, enter a disconnected state.

In an embodiment, the processing module is configured to: in a case the third timer is running, stop and/or suspend the third timer.

In an embodiment, the processing module is configured to: upon entering a network coverage, restart the third timer or allow the third timer to continue to count.

In an embodiment, the processing module is configured to: in a case the fourth timer expires, enter the disconnected state.

In an embodiment, the processing module is configured to: in a case the fourth timer is running, stop and/or suspend the fourth timer.

In an embodiment, the processing module is configured to: upon entering a network coverage, restart the fourth timer or allow the fourth timer to continue to count.

In an embodiment, the discontinuous coverage scenario includes at least one of: no network coverage; an upcoming network coverage loss; or an acquisition of relevant time information on no network coverage.

FIG. 14 is a schematic block diagram of a wireless communication apparatus illustrated according to an embodiment of the disclosure. As illustrated in FIG. 14, the wireless communication apparatus includes:
a communicating module 1401, configured to communicate with the terminal that executes the method for controlling the RRC state described in any embodiment.

In an embodiment, the communicating module is further configured to: reconfigure and/or re-indicate a validity duration of the timer for the terminal.

Since the apparatus embodiments basically correspond to the method embodiments, relevant contents can refer to the descriptions of the method embodiments. The apparatus embodiments described above are merely schematic, in which the modules described as separate components may or may not be physically separated, and the components shown as modules may or may not be physical modules, i.e., they may be located all at one place or may be distributed to a plurality of network modules. Some or all of the modules may be selected according to actual needs to implement the solution in the embodiments, which may be understood and implemented by those skilled in the art without inventive works.

An embodiment of the disclosure provides a communication system. The communication system includes a terminal and a network device. The terminal is configured to implement the method for controlling the RRC state described in any of the above embodiments, and the network device is configured to implement the wireless communication method described in any of the above embodiments.

An embodiment of the disclosure provides a communication device. The communication device includes a processor and a memory for storing computer programs. When the computer programs are executed by a processor, the method for controlling the RRC state described in any of the above embodiments is implemented.

An embodiment of the disclosure provides a communication device. The communication device includes a processor and a memory for storing computer programs. When the computer programs are executed by a processor, the wireless communication method described in any of the above embodiments is implemented.

An embodiment of the disclosure provide a computer-readable storage medium for storing computer programs. When the computer programs are executed by a processor, the method for controlling the RRC state described in any of the above embodiments is implemented.

An embodiment of the disclosure provide a computer-readable storage medium for storing computer programs. When the computer programs are executed by a processor, the wireless communication method described in any of the above embodiments is implemented.

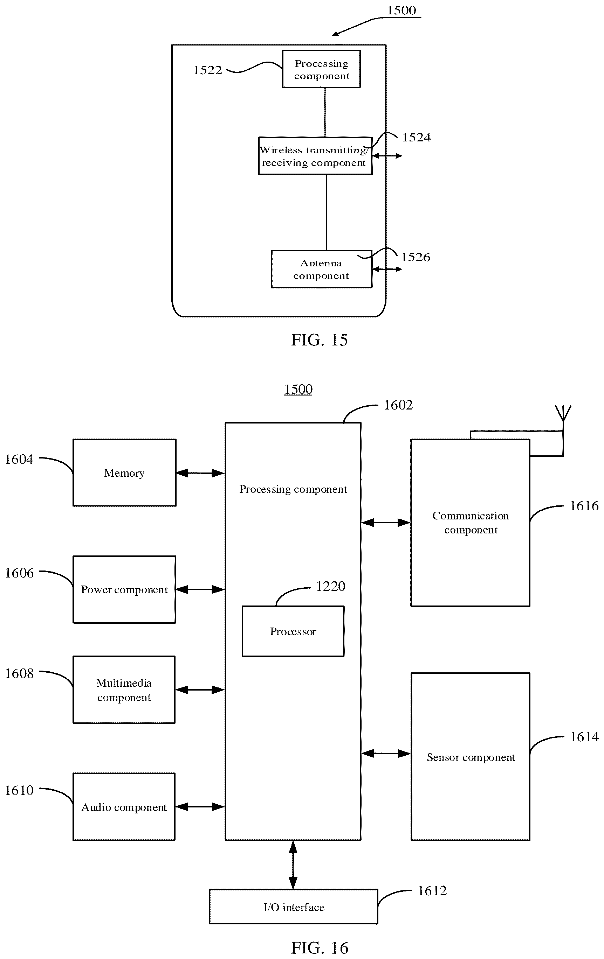

FIG. 15 is a schematic block diagram of a wireless communication device 1500 illustrated according to an embodiment of the disclosure. The device 1500 may be provided as a base station. As illustrated in FIG. 15, the device 1500 includes a processing component 1522, a wireless transmitting/receiving component 1524, an antenna component 1526, and a signal processing portion specific to a radio interface. The processing component 1522 includes one or more processors. One of the processors in the processing component 1522 is configured to implement the wireless communication method described in any of the above embodiments.

FIG. 16 is a schematic block diagram of a device 1600 for controlling an RRC state illustrated according to an embodiment of the disclosure. For example, the device 1600 may be a mobile phone, a computer, a digital broadcasting terminal, a message transceiver device, a game console, a tablet device, a medical device, a fitness device and a personal digital assistant, etc.

As illustrated in FIG. 16, the device 1600 may include one or more of the following components: a processing component 1602, a memory 1604, a power component 1606, a multimedia component 1608, an audio component 1610, an input/output (I/O) interface 1612, a sensor component 1614, and a communication component 1616.

The processing component 1602 typically controls overall operations of the device 1600, such as operations associated with display, telephone calls, data communications, camera operations, and recording operations. The processing component 1602 includes one or more processors 1620 to execute instructions to implement all or part of the steps in the method for controlling the RRC state described in any of the above embodiments. Moreover, the processing component 1602 may include one or more modules which facilitate the interaction between the processing component 1602 and other components. For example, the processing component 1602 may include a multimedia module to facilitate the interaction between the multimedia component 1608 and the processing component 1602.

The memory 1604 is configured to store various types of data to support the operation of the device 1600. Examples of such data include instructions for any applications or methods operated on the device 1600, contact data, phonebook data, messages, pictures, videos, etc.

The power component 1606 provides power to various components of the device 1600. The power component 1606 may include a power management system, one or more power sources, and any other components associated with generation, management, and distribution of power in the device 1600.

The multimedia component 1608 includes a screen providing an output interface between the device 1600 and the user. In some embodiments, the screen may include a liquid crystal display (LCD) and a touch panel (TP). If the screen includes the TP, the screen may be implemented as a touch screen to receive input signals from the user.

The audio component 1610 is configured to output and/or input audio signals. For example, the audio component 1610 includes a microphone (MIC) configured to receive external audio signals when the device 1600 is in an operation mode, such as a call mode, a recording mode, and a voice recognition mode. The received audio signals may be further stored in the memory 1604 or transmitted via the communication component 1616. In some embodiments, the audio component 1610 further includes a speaker to output audio signals.

The I/O interface 1612 provides an interface between the processing component 1602 and peripheral interface modules, such as a keyboard, a click wheel, buttons, and the like. The buttons include, but are not limited to, a home button, a volume button, a starting button, and a locking button.

The sensor component 1614 includes one or more sensors to provide status assessments of various aspects of the device 1600.

The communication component 1616 is configured to facilitate communication, wired or wirelessly, between the device 1600 and other devices. The device 1600 can access a wireless network based on a communication standard, such as wireless fidelity (Wi-Fi), 2G, 3G, 4G LTE, 5G NR or a combination thereof. In an example embodiment, the communication component 1616 receives a broadcast signal or broadcast associated information from an external broadcast management system via a broadcast channel. In an example embodiment, the communication component 1616 further includes a near field communication (NFC) module to facilitate short-range communication. For example, the NFC module may be implemented based on a radio frequency identification (RFID) technology, an infrared data association (IrDA) technology, an ultra-wide band (UWB) technology, a blue tooth (BT) technology, and other technologies.

In an example embodiment, the device 1600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the method for controlling the RRC state described in any of the above embodiments.

In an example embodiment, there is also provided a non-transitory computer readable storage medium including instructions, such as the memory 1604. The instructions may be executed by the processor 1620 in the device 1600, for performing the method for controlling the RRC state described in any of the above embodiments. For example, the non-transitory computer-readable storage medium may be a read only memory (ROM), a random access memory (RAM), a Compact Disc-ROM (CD-ROM), a magnetic tape, a floppy disc, or an optical data storage device.

Other embodiments of the disclosure will be apparent to those skilled in the art from consideration of the specification and practice of the disclosure disclosed here. The disclosure is intended to cover any variations, usages, or adaptations of the disclosure following the general principles thereof and including such departures from the disclosure as come within known or customary practice in the art. It is intended that the specification and the embodiments are considered as exemplary only, with a true scope and spirit of the disclosure being indicated by the attached claims.

It will be appreciated that the disclosure is not limited to the exact construction that has been described above and illustrated in the accompanying drawings, and that various modifications and changes may be made without departing from the scope thereof. It is intended that the scope of the disclosure only be limited by the attached claims.

## Claims

1. A method for controlling a radio resource control state, performed by a terminal, comprising:
in a case the terminal is in a discontinuous coverage scenario, controlling a radio resource control state of the terminal according to an out-of-sync related indication and/or a state of a timer.

2. The method of claim 1, wherein controlling the radio resource control state of the terminal according to the out-of-sync related indication and/or the state of the timer comprises:
in a case a first number of consecutive out-of-sync related indications are determined, entering a disconnected state.

3. The method of claim 1, wherein controlling the radio resource control state of the terminal according to the out-of-sync related indication and/or the state of the timer comprises:
in a case a number of consecutive out-of-sync related indications is determined to be less than a first number, maintaining in a connected state and stopping counting the out-of-sync related indication.

4. The method of claim 3, further comprising:
upon entering a network coverage, continuing to count the out-of-sync related indication.

5. The method of any one of claims 2-4, wherein the out-of-sync related indication comprises at least one of:
an out-of-sync indication; or
an early-out-of-sync indication.

6. The method of any one of claims 1-5, wherein the timer comprises at least one of:
a first timer, wherein in a case an out-of-sync problem on a radio link is detected, the first timer is started, and in a case the first timer expires and a synchronization with a network device is not restored, a radio resource control reestablishment is initiated;
a second timer, wherein in a case a radio resource control reestablishment is initiated, the second timer is started, and in a case the second timer expires and the radio resource control reestablishment fails, the terminal enters a disconnected state;
a third timer, configured to count a validity period of system information; or
a fourth timer, wherein in a case a third timer expires, the fourth timer is started, and in a case the fourth timer expires and system information fails to be acquired, the terminal enters a disconnected state.

7. The method of claim 6, wherein controlling the radio resource control state of the terminal according to the out-of-sync related indication and/or the state of the timer comprises:
in a case the first timer expires, entering a disconnected state; or
in a case the first timer is running, stopping and/or suspending the first timer.

8. The method of claim 7, wherein in a case the first timer is running, stopping and/or suspending the first timer comprises:
upon entering a network coverage, restarting the first timer, or allowing the first timer to continue to count.

9. The method of claim 6, wherein controlling the radio resource control state of the terminal according to the out-of-sync related indication and/or the state of the timer comprises:
in a case the second timer is running, entering the disconnected state; or
in a case the second timer is running, stopping and/or suspending the second timer.

10. The method of claim 9, wherein in the case the second timer is running, stopping and/or suspending the second timer comprises:
upon entering a network coverage, restarting the second timer, or allowing the second timer to continue to count.

11. The method of claim 6, wherein controlling the radio resource control state of the terminal according to the out-of-sync related indication and/or the state of the timer comprises:
in a case the third timer expires, entering a disconnected state; or
in a case the third timer is running, stopping and/or suspending the third timer.

12. The method of claim 11, wherein in a case the third timer is running, stopping and/or suspending the third timer comprises:
upon entering a network coverage, restarting the third timer, or allowing the third timer to continue to count.

13. The method of claim 6, wherein controlling the radio resource control state of the terminal according to the out-of-sync related indication and/or the state of the timer comprises:
in a case the fourth timer expires, entering the disconnected state; or
in a case the fourth timer is running, stopping and/or suspending the fourth timer.

14. The method of claim 13, wherein in a case the fourth timer is running, stopping and/or suspending the fourth timer comprises:
upon entering a network coverage, restarting the fourth timer, or allowing the fourth timer to continue to count.

15. The method of any one of claims 1-14, wherein the discontinuous coverage scenario comprises at least one of:
no network coverage;
an upcoming network coverage loss; or
an acquisition of relevant time information on no network coverage.

16. An apparatus for controlling a radio resource control state, comprising:
a processing module, configured to, in a case a terminal is in a discontinuous coverage scenario, control a radio resource control state of the terminal according to an out-of-sync related indication and/or a state of a timer.

17. A communication device, comprising:
a processor; and
a memory for storing computer programs;
wherein when the computer programs are executed by the processor, the method for controlling the radio resource control state according to any one of claims 1-15 is implemented.

18. A computer-readable storage medium for storing computer programs, wherein when the computer programs are executed by a processor, the method for controlling the radio resource control state according to any one of claims 1-15 is implemented.
